# EUROPEAN PATENT APPLICATION

(11) **EP 1 676 821 A1**
(43) Date of publication of application: **05.07.2006**
(21) Application number: 04078567.7
(22) Date of filing: 29.12.2004
(51) Int. Cl.: C04B 28/02, C04B 24/38

(54) **Shaped concrete body**

(71) Applicant: Coöperatieve Verkoop- en Productievereniging van Aardappelmeel en Derivaten 'AVEBE' B.A., NL-9641 JA Veendam (NL)
(72) Inventor: Veen, Uko, 9649 HB Muntendam (NL); Kremer, Karin, 9918 PN Garrelsweer (NL); Terpstra, Jacob, 9403 SM Assen (NL)
(74) Representative: Winckels, Johannes Hubertus F.

(57) **Abstract**

The invention relates to a method for preparing a concrete shaped body from a moist concrete. The method comprises providing a mixture comprising cement, water, sand, gravel and starch thereby forming the moist concrete; and shaping the concrete into the desired shape. The invention further relates to a concrete mixture and a concrete shaped body, comprising starch.

## Description

The invention relates to a method for preparing a concrete shaped body from a moist concrete, to moist concrete and to a concrete body prepared from moist concrete.

Formed concrete bodies are made by filling moulds with concrete. Examples of such concrete bodies are bricks, slabs (paving stones), curbstones, etc. After removal of the moulds the shape of the concrete bodies has to be retained. The removal of the mould is at such a short time after filling that setting of cement cannot play a significant role in retaining the shape. Therefore, retaining the shape of the bodies is a critical step in the production process.

In order to obtain sufficient retainment of the shape, normally concrete with a very low amount of water is used, so-called earth moist concrete. This concrete has a very high so-called green strength. The green strength is the strength of fresh concrete before setting of cement plays a role. A low amount of water also ensures that the concrete does not stick to the moulds or the press.

However, the necessity to use a low amount of water has several disadvantages. In particular, filling the moulds becomes difficult. Known methodologies require a combination of extensive pressing and vibration is necessary in order to achieve sufficient filling. A bad filling by insufficient pressing or vibration leads to a larger porosity of the concrete, a lower strength , a lower wear resistance of the concrete, less resistance against frost/thaw (especially relevant to concrete bricks) and defects of the shape or surface of the concrete bodies. Another disadvantage is incomplete hydration of the cement present in the concrete which lowers the strength and can make an increase of the amount of cement necessary.

Filling the moulds requires a lot of energy and wear and tear of the production machinery. Furthermore, this process results in a lot of noise. Another process to fill the moulds is extrusion. For both production techniques (pressing and compaction, extrusion) a good flowing of the concrete and reduction of friction is important. By increasing the amount of water or addition of a plasticizer friction can be reduced and flow can be improved. However, the use of these measures is limited, because of the demand of retaining the shape.

It is an object of the invention to provide a novel method for preparing a concrete shaped body from a moist concrete, that can be used as an alternative to known methods.

It is a further object to provide a method for preparing a concrete shaped body from a moist concrete, wherein the shape of the concrete body is retained better, also in the absence of a supporting means such as a mould, than in a comparable known method.

An additional object is to provide a method for preparing a concrete shaped body from a moist concrete with good filling properties for filling a mould with the concrete, whilst maintaining sufficient retaining properties of the shape, also if the mould is removed before the concrete has substantially set.

Another object is to provide a method which allows the use of a higher amount of water than in conventional methodology making use of moist concrete, whilst maintaining good shape retaining properties of the concrete, before substantial setting of the concrete.

Further objects will be apparent from the description and/or claims.

It has now been found that it is possible to realise one or more of these objects by using a moist concrete comprising a specific polymer.

Accordingly, the present invention relates to a method for preparing a concrete shaped body from a moist concrete, comprising
- providing a mixture comprising cement, water and starch thereby forming the moist concrete; and
- shaping the concrete into the desired shape, preferably by moulding.
   In addition to cement, water and starch an aggregate (sand and/or gravel) is usually present in the moist concrete.

The term "moist concrete" is in particular used for a concrete having a compaction class C0, C1 or C2 as defined in EN 206-1. Accordingly, the degree of compactability (C) of a moist concrete is in particular at least 1.11. Preferably, C is more than 1.20, in particular more than 1.25 *(i.e.* class C0 or C1).

Good results have been achieved with a concrete, wherein C is less than 1.46. Particularly good results have been achieved with an earth moist concrete *(i.e.* class C1 or C0), in particular an earth moist concrete of class C 1 (i.e. having a C value in the range of 1.26-1.45).

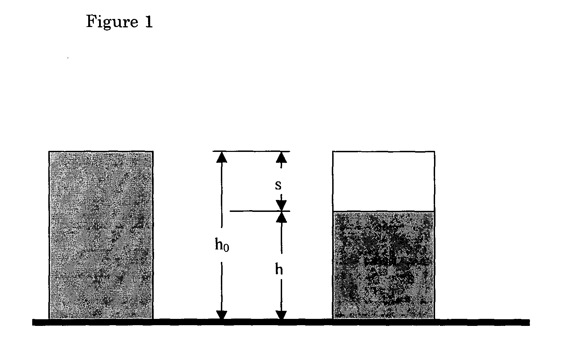

C is defined herein as (h₀/(h₀-s), wherein ho is the initial height of a column of concrete, s the difference between ho and h wherein h is the height after sagging (see figure 1). C may be determined according to NEN 5958.

In a method according to the invention, sufficient dimension stability of the shaped body is usually reached shortly after shaping (e.g. in a mould), typically within a few seconds to a couple of minutes.

Starch and starch derivatives and combinations of these with other polymers have been found to improve the production process and /or the concrete properties in a number of ways.

The internal friction of the concrete and the friction between the concrete and production equipment may be decreased so that filling the moulds may improve. As a consequence pressing and vibration may be reduced, which leads to less wear and tear of the production machinery. The reduced internal friction can also lead to increased homogeneity of the concrete and/or an increased density of the concrete. An increased density may be desired for providing a concrete with a relatively low pore volume and/or a small average pore size. An increased density may contribute to improved thaw/frost resistance, a low efflorescence of salts (in particular free lime), a better wear resistance of the concrete and/or a higher colour intensity of an article made from the concrete.

In an embodiment, the use of starch or a combination of starch with one or more other polymers increases the green strength of the concrete which contributes to retaining the shape of the concrete body. This leads to a reduction in B-grade production (products with a relatively low quality, yet still useful for less demanding applications), and thus to an increase in A-grade production (high quality products; usually not showing a substantial amount of visible deformations[t1]).

Further, a method according to the invention allows the use of a higher amount of water and/or plasticizer, whilst maintaining good stability and/or strength. Increase of the amount of water is thought to lead to a more complete cement hydration. This makes it possible to increase the strength of the concrete and/or offers the opportunity to decrease the amount of cement in the formulation. A better cement hydration may also change the pore size distribution and lead to a decreased pore volume. As a consequence the thaw/frost resistance of the concrete may be improved because the tendency of water from the environment to penetrate into the concrete is reduced.

Moreover, the surface characteristics of the shaped bodies may be improved because of a more favourable rheology. Smooth surfaces with a low number of surface defects are obtainable in accordance with the invention.

As cement, any cement suitable for preparing concrete may be used, in particular any cement as defined in NEN-EN 206-1 and more specifically in EN 197-1.

As aggregate (meaning sand and./or gravel) any aggregate suitable for preparing concrete may be used as, in particular any aggregate as defined in NEN-EN 206-1 and more specifically in prEN 12620:2000 for normal and heavy-weight aggregate and prEN 13055-1:1997 for light-weight aggregates.

The starch may in principle be any starch, including modified starches, such as chemically, biologically and/or physically modified starches.

In principle a starch from any starch may be used. Suitably, a starch may be selected from potato, tapioca, maize and wheat, including starch from varieties having a high amylopectin content, such as amylopectin potato starch and waxy maize starch. In particular, good results have been achieved with a potato starch.

Preferably, at least part of the starch is a chemically modified starch. Such starches are commercially available or may be made by a method known in the art. For an overview of known derivatisation reactions, reference is made to O.B. Wurzburg (Ed.), "Modified Starches: Properties and Uses", CRC Press Inc., Boca Eaton, Florida, 1986.

Suitable chemically modified starches include starch ethers, starch esters and crosslinked starches. Preferred examples include starch ethers and crosslinked starch, including cross-linked starch ethers.

Very suitable is a starch that is hydroxyalkylated and/or carboxyalkylated, in particular a starch that is hydroxypropylated and/or carboxymethylated. In a preferred embodiment such hydroxyalkylated and/or carboxyalkylated starch is cross-linked.

The degree of modification may be chosen within wide limits.

In an embodiment, the degree of hydroxyalkylation (DS) of the starch is between 0.01 and 2.0 hydroxyalkylations per monosaccharide unit. In a particular embodiment the degree of hydoxyalkylation is in the range of 0.05-0.8.

In an embodiment, the degree of carboxyalkylation of the starch (DS) is between 0.01 and 0.5 carboxyalkylations per monosaccharide unit.

The starch may be cross-linked with any cross-linking agent known in the art, including epichlorohydrin, linear dicarboxylic acid anhydrides, citric acid acrolein, phosphorus oxychloride, adipic/acetic mixed acid anhydrides, dichloro acetic acid, trimetaphosphate salts, acrolein, polyphosphates (*e*.*g*. hexametaphosphate), biphenyl compounds, N,N,-dimethylol-imidzolidon-2 (DMEU), formaldehyde, cyanuric chloride, diioscyanates, dimethylolethylene urea and divinyl sulfones.

The cross-linking reaction may be carried out under any conditions which are known to be suitable for this type of reaction.

Crosslinking may very suitably be done to a cross-linking degree (DS) of about 0.0001 to about 0.05, in particular with epichlorohydrine as the crosslinking agent.

The starch ester can e.g. suitably be prepared as described in EP A-1 225 268 (in particular page 5, lines 25-28). Thus, it may be prepared by reacting an aqueous suspension of the starch with an alkali (such as NaOH) at a pH in the range of 6-9.5, usually at a temperature of about 20-40 °C.

In an embodiment, the degree of esterification of the starch (DS) is between 0.02 and 2 ester moieties per monosaccharide unit.

The amount of starch in the concrete may be chosen in wide limits. In practice, an amount of starch in the range of 0.01 to 1.0 wt.%, based upon the weight of cement, usually suffices. An amount in the range of about 0.05 to 0.3 % has been found advantageous in terms of good performance to cost ratio.

In addition to starch, cement, water and usually aggregate, one or more components may be added to the concrete.

In particular, good results have been achieved with a method wherein besides starch, at least one second (organic) polymer is present, in particular a polysaccharide, preferably at least one polysaccharide selected from the group consisting of cellulose, xanthane gum, tamarind, welan gum and guar.

The further polysaccharide is preferably chemically modified, more preferably a polysaccharide ether. Optionally the further polysaccharide is cross-linked.

With respect to the nature of the modifications the further polysaccharide may generally be modified in a manner as indicated for the starch. A preferred further polysaccharide is an alkylpolysaccharide - in particular a alkylcellulose, more in particular a methylcellulose - which has a DS of about 1-2. More preferably the alkylpolysaccharide (alkylcellulose) is additionally (hydroxyl)alkylated, in particular with a DS of 0.05 to 0.5.

It has been found that compared to the use of starch alone, the use of a combination of starch and the further polymer, preferably a further polysaccharide, in particular a combination of starch ether and cellulose ether, allows the use of a considerable extra amount of water in the concrete, whilst maintaining a good dimension stability and a high flexural strength, which strength may even be further improved.

When used, the total amount of the further polymer(s), in particular the polysaccharide other than starch, more in particular a cellulose (such as cellulose ether), is preferably 3- 50 wt. % based on the combined weight of the polymer(s) including the starch, more preferably up to 20 wt. %.

Particularly good results have *inter alia* been achieved with a further polymer, in particular a polysaccharide other than starch, more in particular a cellulose (such as cellulose ether), in an amount of at least about 5 wt. % based on the combined weight of the polymer(s) including the starch.

Further, one or more other additives may be present in the concrete. In particular an additional plasticizer and/or a water adsorbing agent may be present. Particular suitable plasticizers may be selected from the group consisting of lignosulfonates, melamine-based or naphtalene-based superplasticizers, polycarboxylates and the like; a particularly suitable water adsorbing agent is limestone powder.

The method of the invention involves shaping of the moist concrete into the desired shape. This may be done based upon a method known in the art.

Preferably, the shaping is accomplished by filling a mould with the moist concrete. The moist concrete can be distributed in a highly homogenous manner in the mould.

In an embodiment the moist concrete in the mould is subjected to vibratory ramming until it is dense and ready for removal from the mould. This facilitates densification of the concrete, which improves the dimension stabilisation of the concrete. In accordance with the invention, the required vibration may be reduced, compared to a moulding method wherein use is made of a concrete not comprising the starch, or substantial vibration may even be omitted.

In an embodiment, the concrete in the mould is compressed by an upper press. The method may be carried out with reduced pressurisation (compared to a method wherein use is made of a concrete not comprising the starch) or even without subjecting the concrete to substantial pressing on an upper surface of the concrete in the mould.

Usually the demoulding may be done immediately after filling, and - if desired - vibration and/or pressing. It is usually not necessary that the concrete has substantially set, before removing the mould. Due to the improved properties of the concrete comprising the starch, the residence time in the mould may be reduced. Thus, per mould a higher through-put of shaped bodies is realised, which is a considerable advantage. A suitable residence time can be determined empirically, without undue burden. Usually a residence time of about 1 min. or more suffices. If desired, shorter residence times are feasible though, such as a residence time of less than about 30 sec, or even less than 10 sec; it is an option within the present invention to separate the shaped body from the mould, immediately after filling the mould.

From a technical view, the upper limit is not particularly critical.

The invention further relates to a shaped concrete body, in particular a moulded body, obtainable by a method according to the invention. In particular, the invention relates to a shaped concrete article wherein the concrete comprises a starch as defined above, and optionally one or more ingredients as mentioned above. The article is in particular made from moist concrete, which concrete has set.

A shaped article according to the invention usually has a good appearance, such as a smooth surface and/or good strength properties.

In an embodiment, the concrete article is selected from the group consisting of bricks, slabs, paving stones, curbstones, garden ornaments, street furniture and tiles.

The invention in particular relates to a shaped concrete body, meeting the requirements put in the respective NEN-EN standards for concrete articles, such as NEN-EN 1338 for concrete paving blocks, NEN-EN 1339 for concrete paving flags or EN-EN 1340 for concrete kerb units.

Another aspect of the invention is a moist concrete which may be used in a method according to the invention. The composition of the moist concrete generally is as described above when describing the method of the invention in detail. Advantages of the use of a moist concrete according to the invention, compared to conventional (earth) moist concrete include: reduction of energy costs during the production of shaped articles of the concrete, reduction of wear and tear and/or maintenance of machinery, increased strength, shorter cycle times and/or saving on cement use by using less cement to realise the same strength. The concrete may further lead to one or more other advantages (in a product made from the moist concrete), which are thought to be at least partially caused by the increase in density, in the presence of the starch and optionally another polymer (such as cellulose or a further polysaccharide). Such advantages include: Increased freeze/thaw resistance, less efflorescence, high(er) wear resistance, intensified colour, improved surface properties.

In an embodiment, the moist concrete has a degree of compactability of at least 1.11, as determined by NEN-EN 5958, preferably of at least 1.20, more preferably of at least 1.26. In practice, the moist concrete preferably has a degree of compactability of up to 1.5, in particular of up to 1.45.

An additional aspect of the invention is the use of a starch, in particular a starch as defined above, such as a starch ether, in a concrete - in particular a moist concrete such as earth moist concrete as a reducer of the internal friction of the concrete, as a concrete-homogenising aid or as a flowing-aid.

Moreover, the invention relates to the use of a starch, in defined above, such as a starch ether, in a concrete - in particular a moist concrete such as earth moist concrete - to increase the strength of the concrete. In particular the starch may be used to increase any of the following strengths, alone or in combination: compressive strength, flexural tensile strength, tensile splitting strength and green strength.

In yet another aspect, the invention relates to the use of a starch, as defined above, such as a starch ether, in a concrete - in particular a moist concrete such as earth moist concrete - to improve smoothness of the surface of a shaped body formed of the concrete.

In yet another aspect, the invention relates to the use of a starch, as defined above, to increase the density of a concrete.

The invention will now be illustrated by the following example.

### Example: Production of concrete bricks with starch ether

In a production environment using pressing and vibration, concrete bricks were made with two starch ether products: Solvitose FC50 (SE 1) and the same starch ether containing 10% of the cellulose ether Methocel 254 (SE2). The mix design of the concrete was:

| | |
|---|---|
| CEM III B | 80 kg/m³ |
| CEM II BF | 250 kg/m³ |
| Sand 0-4 | 1400 kg/m³ |
| Gravel 2-8 | 550 kg/m³ |
| Total Water | 109 kg/m³ |

The results are presented in Table 1 and clearly show that a large amount of water can be added to the concrete without causing stickiness or less retaining of the shape. With the mixture of starch ether and cellulose ether (SE2) even a larger amount of water can be added to the concrete than with the pure starch ether (SE1).

Moreover, the strength increases which gives the opportunity to decrease the amount of cement in the concrete. Addition of both the pure starch ether (SE1) and the mixture with cellulose ether (SE2) lead to an increase of the density of the stones. The increased density points at a smaller pore volume. This has several advantages as mentioned above. One of those advantages is improved thaw/frost and salt stability. As pores can generally be filled with water, a smaller pore volume will also mean a smaller amount of water in the stones leading to a better thaw/frost stability.

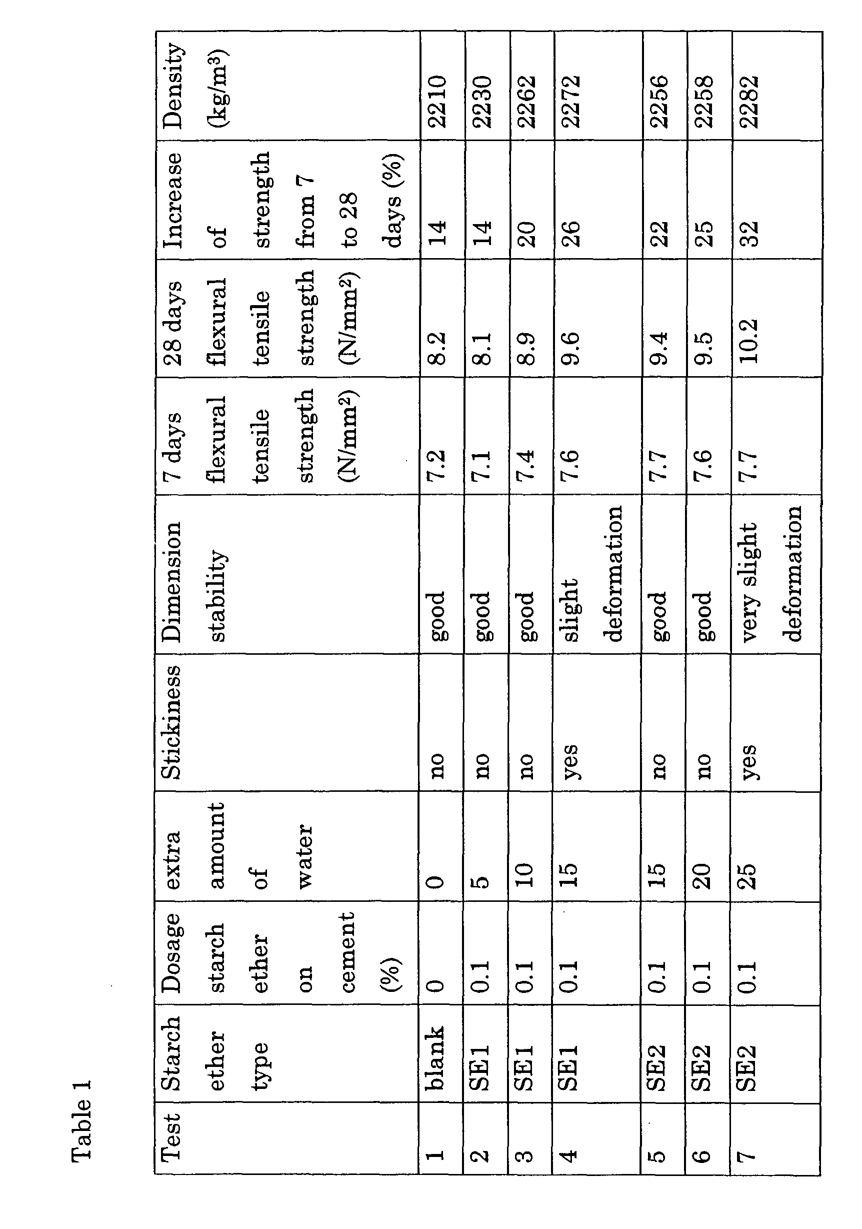

## Claims

1. Method for preparing a concrete shaped body from a moist concrete, comprising
- providing a mixture comprising cement, water, aggregate (i.e. sand and/or gravel) and starch thereby forming the moist concrete; and
- shaping the concrete into the desired shape, preferably by moulding.

2. Method according to claim 1, wherein at least one starch is used selected from the group consisting of underivatised starches, chemically modified starches, biologically modified starches and physically modified starches, including cross-linked starches, starch esters and starch ethers.

3. Method according to claim 2, wherein at least one starch ether is used selected from hydroxyalkylated starches, carboxyalkylated starches, including starches that are both hydroxyalkylated and carboxyalkylated.

4. Method according to claim 3, wherein the hydoxyalkylated starch is a hydroxypropylated starch and/or the carboxyalkylated starch is a carboxymethylated starch.

5. Method according to claim 3 or 4, wherein the degree of hydroxyalkylation (DS) of the starch is between 0.01 and 2.0 hydroxyalkylations per monosaccharide unit.

6. Method according to any one of the claims 3-5, wherein the degree of carboxyalkylation of the starch (DS) is between 0.01 and 0.5 carboxyalkylations per monosaccharide unit.

7. Method according to any one of the claims 2-6 wherein the degree of cross-linking of the starch with epichlorohydrin (DS) is between 0.0001 and 0.05.

8. Method according to any one of the preceding claims, wherein the amount of starch in the moist concrete is in the range of 0.01 to 1 wt. % based upon the weight of the cement, preferably in the range of 0.05 to 0.3 wt. % based upon the weight of the cement.

9. Method according to any one of the preceding claims, wherein in addition to the starch at least one further polymer, preferably a further polysaccharide is present.

10. Method according to claim 9, wherein the further polysaccharide is selected from the group consisting of celluloses, xanthane gums, tamarind, welan gums and guar, in particular a cellulose, more in particular a cellulose ether.

11. Method according to claim 9 or 10, wherein the amount of further polymer is in the range of 3-50 wt. %, preferably in the range of 5-20 wt. %, based upon the total weight of starch plus further polymer.

12. Method according to any one of the preceding claims, wherein the moist concrete has a degree of compactability (C) of at least 1.11, preferably at least 1.20, more preferably 1.26-1.45.

13. Method according to any one of the preceding claims, wherein the concrete is shaped in a mould and the concrete in the mould is subjected to at least one treatment selected from: vibrating and pressing.

14. Method according to any one of the preceding claims, wherein the shaped body is selected from the group consisting of bricks, slabs, paving stones, curbstones, garden ornaments, street furniture and tiles.

15. Moist concrete as defined in any of the claims 1-12.

16. Shaped concrete body, comprising a starch as defined in any one of the claims 2-8 and optionally a second polymer as defined in any one of the claims 9-11, said body preferably being selected from the group consisting of bricks, slabs, paving stones, curbstones and tiles.

17. Concrete body according to claim 16, wherein the body is a moulded body.

18. Use of a starch, in particular a starch as defined in any one of the claims 2-8, in a concrete to increase the density of the concrete.

19. Use of a starch, in particular a starch as defined in any one of the claims 2-8, in a concrete for increasing strength, in particular green strength, of the concrete.

20. Use of a starch, in particular a starch as defined in any one of the claims 2-8, in a concrete to improve smoothness of the surface of a shaped body formed of the concrete.

21. Use according to any one of the claims 18-20, wherein the concrete is a moist concrete, having a C value of at least 1.11, preferably of at least 1.20, more preferably of about 1.26-1.45.
